# EUROPÄISCHE PATENTSCHRIFT

(11) **EP 2 522 888 B1**
(45) Veröffentlichungstag und Bekanntmachung des Hinweises auf die Patenterteilung: **11.03.2015**
(21) Anmeldenummer: 12003746.0
(22) Anmeldetag: 11.05.2012
(51) Int. Cl.: F16K 5/06, F16K 31/60

(54) **Kugelhahnventil**
Ball valve
Soupape pour robinet à boisseau sphérique

(30) Priorität: 12.05.2011 DE 102011101453
(43) Veröffentlichungstag der Anmeldung: 14.11.2012
(73) Patentinhaber: Schneider, Ekkehard, Dipl.-Ing., 57610 Altenkirchen (DE)
(72) Erfinder: Schneider, Ekkehard, Dipl.-Ing., 57610 Altenkirchen (DE)
(74) Vertreter: Geskes, Christoph

(56) Entgegenhaltungen:
- DE-A1- 2 249 056
- DE-A1- 2 332 151
- DE-A1- 2 625 483
- DE-C- 882 638

## Beschreibung

Die vorliegende Erfindung betrifft ein Kugelhahnventil für Behälter zum Transport und Lagern von insbesondere Flüssigkeiten, als auch ein in einem Kugelhahnventil einsetzbares Küken.

Kugelhahnventile sind dem angesprochenen Fachmann bekannt. Zwar nicht für Behälter zum Transport und Lagern von insbesondere Flüssigkeiten, sondern einen in einer Absperreinrichtung verwendbaren Absperrmechanismus, der hohen Temperaturen und Drücken ausgesetzt ist, offenbart die EP 0 134 503 B1, mit einem scheibenförmig ausgebildeten Küken mit Ansätzen, über welche das scheibenförmige Küken drehbar in einem Gehäuse gelagert ist, zeigt. Die Vorrichtung gemäß der EP 0 134 503 B1 ist allerdings sehr komplex und vielteilig ausgestaltet und dementsprechend nur kostenaufwendig herzustellen.

DE 23 32 151 A1 offenbart einen Kugelhahn mit Hahnküken und Hahngehäuse sowie einen über eine Steckverbindung mit einem Hahnküken verbindbaren Mitnehmer, mit welchem die Aufgabe gelöst werden soll, einen Kugelhahn zur Verfügung zu stellen, bei dem der Mitnehmer sicher mit dem Hahnküken verbindbar ist und bei dem das Hahnküken nicht geschwächt, beziehungsweise die Kugel vom Mitnehmer, ohne den Mitnehmer den Betriebsdruck unmittelbar auszusetzen, sicher geführt ist. Diese Aufgabe wird dadurch gelöst, dass das Hahnküken auf der dem Mitnehmer zugewandten Oberfläche einen in Richtung der Drehachse verlaufenden Ansatz nach Art eines Zapfens oder dergleichen aufweist und der Mitnehmer an seinem dem Hahnküken zugewandten Ende eine entsprechende Ausnehmung besitzt, mittels der er in Richtung der Drehachse auf das Hahnküken aufsteckbar und damit verdrehsicher verbindbar ist.

DE 2 249 056 A1 offenbart eine Absperrvorrichtung für Flüssigkeiten und Gase in Rohrleitungen, die aus einem innerhalb der Absperrkammer in zwei Achslagern drehbar angeordneten Schieber besteht. Ziel der dort wiedergegebenen Erfindung ist es, eine als Hohlkugel ausgebildete Absperrkammer zur Verfügung zu stellen, die den problemlosen Einbau des Schiebers ermöglicht. Diese Aufgabe wird dadurch gelöst, dass die als Hohlkugel ausgebildete Absperrkammer derart in zwei Hälften unterteilt ist, dass eine Hälfte das eine Achslager und die andere Hälfte das andere Achslager des Drehschiebers aufnimmt.

DE 882 638 C1 offenbart einen Hahn, der ein Hahnküken besitzt, das in dem zugehörigen Sitz drehbar gelagert ist und an dieser Stelle den Abschluss zwischen Ein- und Auslassbeziehungsweise bei Durchgangs- oder Mehrwegehähnen die wahlweise Verbindung zwischen verschiedenen Ein- und Auslässen herzustellen gestattet.

Die den nächstkommenden Stand der Technik bildende

DE 26 25 483 A1 offenbart ein Absperrventil, insbesondere zur Entleerung von Tankwagen, bei dem im Ventilgehäuse ein drehbares Kugelküken vorgesehen ist, welches den Durchlass in der Absperrlage durch ein an einem Kalottenrand anliegendes elastisches Dichtungselement abdichtet und im Bereich seiner Lagerzapfen Hohlräume aufweist, wobei im Ventilgehäuse wenigstens ein zusätzliches Dichtungselement angeordnet ist, welches am Kugelküken anliegt und die Hohlräume der Drehlager gegen den Eintritt des Fördergutes abdichtet. Hierdurch wird die Aufgabe gelöst, ein Absperrventil zur Verfügung zu stellen, bei dem ein Eindringen des Fördergutes in den Bereich der Drehlager weitgehend vermieden wird.

Aufgabe der vorliegenden Erfindung ist es daher, ein Kugelhahnventil zur Verfügung zu stellen, welches für Behälter zum Transport und/oder Lagern von insbesondere Flüssigkeiten, aber auch anderen Materialien wie Pulvern oder Ähnlichem geeignet ist, eine hinreichende Dichtigkeit aufweist und zudem einfach aufgebaut ist, so dass es auch kostensparend hergestellt werden kann.

Diese Aufgabe wird gelöst durch ein Kugelhahnventil der eingangs genannten Art mit einem Ventilgehäuse mit einem an einem ersten Ende des Gehäuses angeordneten Auslauf und einem dem ersten Ende überliegend angeordneten zweiten Ende zur Anordnung am Behälter, weiterhin umfassend einen Hahn zur Befestigung eines mit dem Hahn in Wirkverbindung stehenden, kugelschalig ausgebildeten Kükens, wobei das Küken auf der Außenseite angeordnet mindestens einen ersten Vorsprung zum Eingriff in eine Bohrung des Gehäuses als auch in eine Bohrung des Hahnes umfasst, wobei auf der Außenseite des Kükens eine umlaufende Nut zur Aufnahme eines Dichtrings angeordnet ist, der gegen eine Innenfläche des Gehäuses abdichtend wirkt, wobei die Nut einen etwa parallel zu einer Hauptachse des Ventils verlaufenden ersten Wandabschnitt und einen bogenförmig ausgebildeten zweiten Wandabschnitt aufweist, der an eine Außenkontur des Dichtrings angepasst ist, sowie eine Tangente T aufweist, die in etwa senkrecht zu der Hauptachse des Ventils verläuft.

Vorzugsweise erfolgt dabei der Eingriff in die Bohrungen des Gehäuses und des Hahnes dergestalt, dass der erste Vorsprung in die Bohrung des Hahnes, die in einem Hals des Hahnes angeordnet ist, eingreift, wobei wiederum der Hals des Hahnes in die Bohrung des Ventilgehäuses eingreift, so dass die Wandungen des Halses des Hahnes zwischen der Innenwandung der Bohrung des Ventilgehäuses und der Außenwandung des ersten Vorsprunges zur Anordnung kommen. Weiter bevorzugt weist die Bohrung des Hahnes zumindest ein dem dem Ventilgehäuse zugewandten Ende, in welchem der erste Vorsprung aufgenommen ist, eine runde oder mehreckige, insbesondere drei-, vier-, fünf-, sechs-, sieben-, acht- oder zwölf eckige Innenkontur auf, welche der Mitnahme des ersten Vorsprunges des Kükens dient. Darüber hinaus ist vorzugsweise zwischen der Außenwandung des Halses des Hahnes und der Innenwandung der Bohrung des Ventilgehäuses mindestens ein Dichtring angeordnet, welcher vorzugsweise in eine auf der Außenumfangsfläche des Halses des Hahnes umlaufende Nut eingelegt ist. Weiter vorteilhafter Weise geht die Bohrung des Ventilgehäuses in einen Ansatz über, welcher einen weiteren Teilbereich des ersten Vorsprunges des Kükens als auch des Halses des Hahnes aufnimmt, und der der Vermittlung einer ausreichenden Stabilität dient beziehungsweise Sicherheit der Bedienung vermittelt.

Der erste Vorsprung ist vorteilhafterweise durch einen Rücksprung etwas von einer Stirnumfangsfläche des Kükens versetzt angeordnet, so dass eine Innenwandung des Kükens zumindest die Bohrung im Hals des Hahnes in Gänze überbrückt. Hierdurch ist eine sichere Lagerung des ersten Vorsprunges in der Bohrung des Halses des Hahnes gewährleistet.

Im Übrigen kann im Sinne der vorliegenden Erfindung das Kugelhahnventil vorteilhafterweise verbunden werden mit einem lösbar mit dem Behälter verbindbaren Auslaufstutzen, oder aber auch einem fest mit dem Behälter verbundenen Auslaufstutzen. Besonders bevorzugt wird das erfindungsgemäße Kugelhahnventil eingesetzt bei Großpackmitteln, sogenannten Intermediate Bulk-Containern (IBC), wie diese beispielsweise aus der DE 103 01 217 A1 bekannt sind. Vorteilhafterweise erfolgt dabei die Verbindung des Kugelhahnventils mit dem Behälter beziehungsweise dem an diesem angeordneten Auslaufstutzen über ein Gewinde, wobei weiter bevorzugt das Kugelhahnventil ein Außengewinde und der Behälter beziehungsweise der Auslaufstutzen desselben ein Innengewinde aufweist.

Im Übrigen ist der Auslauf des Ventilgehäuses vorteilhafterweise mit einem Deckel verschließbar ausgebildet. Besonders bevorzugt ist dabei der Auslauf derart ausgebildet, dass er ein Außengewinde aufweist, auf welches ein Deckel mit einem Innengewinde aufschraubbar ist. Der Deckel kann dabei vorteilhafterweise innen liegend einen Dichtring aufweisen, welcher auf die Kopffläche des Auslaufes arbeitet. Des Weiteren kann noch ein zusätzlicher Zwischenring zur Positionierung des Deckels oder Stabilisierung desselben zwischen Auslauf und Deckel vorgesehen werden.

In einer weiter bevorzugten Ausführungsform des erfindungsgemäßen Kugelhahnventils, umfasst das Küken gegenüberliegend dem Hahn auf der Außenseite angeordnet mindestens einen in einer Aufnahme im Inneren des Gehäuses eingreifenden zweiten Vorsprung.

Diese Aufnahme im Inneren des Ventilgehäuses für den zweiten Vorsprung ist vorteilhafterweise rund ausgebildet. Der zweite Vorsprung des Kükens selbst schließt dabei vorteilhafterweise bündig mit der Stirnumfangsfläche des Kükens ab, so dass insbesondere auch kein Rücksprung oder Ähnliches, wie dies vorteilhafterweise beim ersten Vorsprung der Fall ist, gebildet sein muss. Die Ausnehmung im Inneren des Gehäuses ist zur Aufnahme des zweiten Vorsprunges kann dabei vorteilhafterweise derart ausgebildet sein, dass auf der der offenen Seite des Kükens zugewandten Seite die Ausnehmung eine geringere Höhe aufweist als auf der der geschlossenen Seite des Kükens zugewandte Wand der Ausnehmung. Insbesondere kann auch die der offenen Seite des Kükens zugewandte Wand der Ausnehmung eine Abschrägung aufweisen, wodurch der Einsatz des Kükens bei Zusammenbau des erfindungsgemäßen Kugelhahnventils erheblich erleichtert ist.

Vorteilhafterweise ist der erste und/oder zweite Vorsprung als Vollkörper, das heißt massiv, ausgebildet. Weiter vorteilhafterweise ist der erste und/oder der zweite Vorsprung einteilig mit dem Küken, bevorzugt materialeinheitlich, ausgebildet. Besonders bevorzugt ist der erste und/oder zweite Vorsprung zapfenförmig ausgebildet. Weiter bevorzugt ist der erste Vorsprung im wesentlichen vollständig, noch weiter bevorzugt vollständig, in einem Hals des Hahns aufgenommen. Dabei liegt vorzugsweise eine Außenwandung des ersten Vorsprungs an einer entsprechend ausgestalteten Innenwandung des Halses des Hahns, zumindest teilflächig, an, oder aber ist gegenüberliegend, der Kontur angepasst, angeordnet, so dass ggf. ein geringes Spiel vorliegt zwischen Hahn und Küken. Besonders bevorzugt ist die Außenkontur des ersten und/oder zweiten Vorsprunges rund oder mehreckig, insbesondere drei-, vier-, fünf-, sechs-, sieben-, acht- oder zwölfeckig, ausgebildet. Durch diese Ausbildung der Seitenwandungen der vorzugsweise zapfenförmig ausgebildeten ersten und/oder zweiten Vorsprünge kann eine sichere Mitnahme insbesondere durch den Hahn, bezogen auf den ersten Vorsprung, sichergestellt werden, insbesondere soweit der Hahn im Bereich der Außenwandung des in diesen eingreifenden ersten Vorsprunges eines der Außenwandung des ersten Vorsprunges entsprechend ausgebildete Innenkontur aufweist. Der erste und/oder zweite Vorsprung ist in einer Draufsicht vorzugsweise rund oder aber dreieckig, viereckig, fünfeckig, sechseckig, siebeneckig, achteckig, zwölfeckig oder sonstwie mehreckig ausgebildet.

Vorteilhafterweise weist zumindest der erste Vorsprung, gegebenenfalls auch der zweite Vorsprung, insbesondere dann, wenn zapfenförmig ausgebildet, auf der dem Hahn beziehungsweise dem Boden der Ausnehmung zugewandten Oberseite mindestens eine Abflachung auf. Diese Abflachungen können auch als Abschrägungen angesprochen werden. Durch diese wird der Einsatz des Kükens bei Zusammensetzung des erfindungsgemäßen Kugelhahnventils erheblich vereinfacht, und darüber hinaus Blockierungen bei Betätigungen des Kükens mittels des Hahnes vermieden.

Vorteilhafterweise ist das Küken in etwa viertel- oder in etwa halbkugelschalig ausgebildet. In einer weiter bevorzugten Ausführungsform ist auf der Außenseite des Kükens eine umlaufende Nut zur Aufnahme eines Dichtungsrings angeordnet, der gegen eine Innenfläche des Gehäuses abdichtend wirkt. Besonders bevorzugt ist der Dichtring derart in die Nut eingesetzt, dass dieser unter Spannung steht. Hierdurch kann der Dichtring sicher in der Nut gehalten werden.

Der sichere Halt des Dichtrings in der Nut wird zumindest auch zur Verfügung gestellt durch eine spezifische Ausbildung der Nut selbst. Erfindungsgemäß weist dabei die Nut einen in etwa parallel zu einer Hauptachse des Ventils verlaufenden ersten Wandabschnitt und einen bogenförmig ausgebildeten zweiten Wandabschnitt auf, der an die Außenkontur des Dichtringes angepasst ist, und dessen Tangente etwa senkrecht zu der Hauptachse des Kugelhahnventils verläuft. Durch die genannte Ausbildung der Nut ist auf der Außenseite des Kükens ein etwas hervorstehender, hutartiger Mittelbereich geschaffen, welcher vorzugsweise eine Abflachung aufweist. Auf diesen etwas hervorstehenden Mittelbereich kann einfach und sicher der Dichtring unter Spannung, auch automatisiert, aufgezogen und dann in die in erster Linie durch den zweiten Wandabschnitt gebildete Aufnahme für den Dichtring in der Nut eingeschoben werden. Der Dichtring ist dabei gleichwohl zumindest teilweise auch in Kontakt mit dem ersten Wandabschnitt der Nut. Dem ersten Wandabschnitt gegenüberliegend ist vorteilhafterweise kein weiterer Wandabschnitt der Nut vorgesehen, so dass insoweit der erste Wandabschnitt vorteilhafterweise teilweise freiliegt, auch dann, wenn der Dichtring in der Nut eingesetzt ist. Gegenstand der vorliegenden Erfindung ist im Übrigen auch ein Kugelhahnventil, welches die vorstehend genannte Ausgestaltung des Kükens mit umlaufender Nut und in der Nut einlegbaren Dichtring betrifft, wobei das Kugelhahnventil dann nicht notwendigerweise die spezifische Ausbildung des Kükens mit erstem und zweitem Vorsprung aufweisen muss. Insofern sind auch andere Verbindungen des Kükens mit Betätigungsmechanismen wie Hähnen vorstellbar, auch solche, welche aus dem Stand der Technik bereits bekannt sind.

Die vorliegende Erfindung betrifft des Weiteren ein Küken, wie insbesondere vorstehend beschrieben in Hinblick auf die spezifische Ausgestaltung der Nut, welches auch als Ersatzteil in Kugelhahnventile eingesetzt werden kann, insbesondere dann, wenn dieses unterschiedliche Anbindungen an Betätigungsmechanismen wie Hähne aufweist. Das erfindungsgemäße Küken muss daher nicht notwendigerweise den ersten und zweiten Vorsprung aufweisen, wie vorstehend beschrieben.

Diese und weitere Vorteile der vorliegenden Erfindung werden anhand der nachfolgenden Figuren näher erläutert. Es zeigen:
- Fig. 1:: eine perspektivische Ansicht eines erfindungsgemäßen Kugelhahnventils;
- Fig. 2:: eine Schnittansicht des erfindungsgemäßen Kugelhahnventils gemäß Fig. 1;
- Fig. 3:: eine Explosionsansicht von schräg oben des erfindungsgemäßen Kugelhahnventils gemäß Fig. 1; und
- Fig. 4:: eine Explosionsansicht, um 90° gedreht zu Fig. 3, des erfindungsgemäßen Kugelhahnventils gemäß Fig. 1.

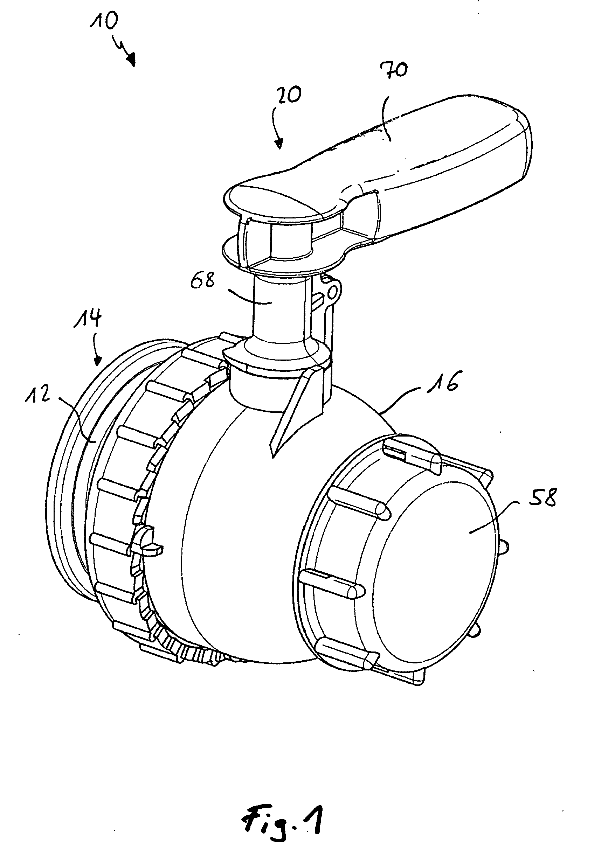

Zunächst sei vorausgeschickt, dass die Erfindung nicht auf die in den Figuren gezeigten Merkmalskombinationen beschränkt ist. Vielmehr sind die jeweils in der Beschreibung einschließlich Figurenbeschreibung offenbarten Merkmale mit denjenigen in den Figuren angegebenen Merkmalen kombinierbar. Insbesondere ist die Ausbildung der in den Fig. 1 bis Fig. 4 gezeigten Ausführungsformen des erfindungsgemäßen Kugelhahnventils mit Befestigungen an einem Auslaufstutzen mit einem Innengewinde, der einstoffig mit dem Behälter verbunden ist, nur eine der möglichen Ausgestaltungen der Anordnung des erfindungsgemäßen Kugelhahnventiles an einem Behälter. Beispielsweise kann das erfindungsgemäße Kugelhahnventil auch an einem auswechselbaren, das heißt an einem Behälter anordbaren Auslaufstutzen angeordnet sein. Des Weiteren sei insbesondere hervorgehoben, dass die Erfindung auch die Ausbildung des Kükens 22 und dabei insbesondere der Nut 42 desselben betrifft, wobei das Küken dann nicht notwendigerweise einen ersten und zweiten Vorsprung 26 beziehungsweise 32 aufweisen muss. Es sei an dieser Stelle auch darauf hingewiesen, dass der Auslaufstutzen 12 und der Behälter 14 nicht Gegenstand des erfindungsgemäßen Kugelhahnventils sind. Auch kann der Auslaufdeckel 58 entfallen, oder ein anderer Verschließmechanismus für den Auslauf 18 gewählt werden. Schließlich ist auch darauf hinzuweisen, dass die in den Ansprüchen aufgenommenen Bezugszeichen in keiner Weise den Schutzbereich der vorliegenden Erfindung beschränken sollen, sondern lediglich auf die in den Figuren gezeigten Ausführungsbeispiele verweisen.

Fig. 1 zeigt ein erfindungsgemäßes Kugelhahnventil 10 in einer perspektivischen Ansicht, welches an einem Auslaufstutzen 12, der einstoffig in die Wandung eines Behälters 14 übergeht (der nicht näher gezeigt ist) anordbar ist. Das Ventil 10 weist ein Ventilgehäuse 16 auf, dessen hier nicht gezeigter Auslauf mit einem Auslaufdeckel 58 verschlossen ist. Des Weiteren weist das Ventil 10 einen Hahn 20 mit einem Griff 70 und einem Hals 68 auf, über welchen ein innerhalb des Ventilgehäuses 16 angeordnetes Küken 22, das hier nicht gezeigt ist, betätigbar ist.

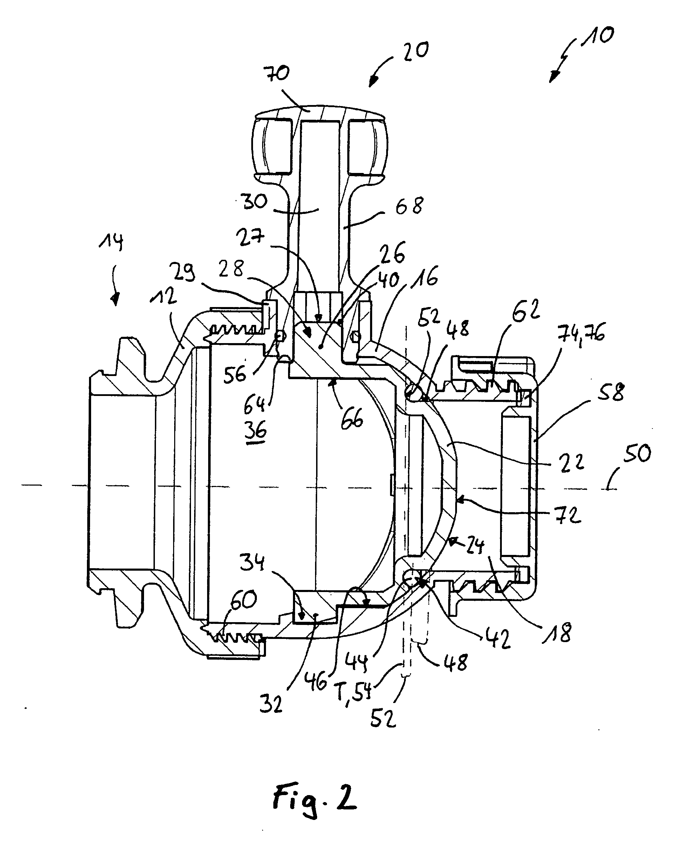

Fig. 2 zeigt eine Schnittanschnitt des Ventils gemäß Fig. 1 in geschlossenem Zustand. Gut zu erkennen ist der grundsätzliche Aufbau des Ventils 10 mit dem Gehäuse 16, welches einen an einem ersten Ende des Gehäuses 16 angeordneten Auslauf 18 aufweist als auch ein zweites, mit einem Außengewinde 60 versehenes Ende zur Anordnung an dem Auslaufstutzen 12 des Behälters 14.

Des Weiteren ist Fig. 2 zu entnehmen, dass der Auflauf 18 ein Außengewinde 62 aufweist, auf welches der Auslaufdeckel 58 aufschraubbar ist unter Einsatz eines Dichtringes 74 und eines Zwischenringes 76, wobei der letztere insbesondere der Positionierung dient.

Der Hahn 20 mit dem Griff 70 und dem Hals 68 weist eine Bohrung 30 auf, so dass der Hals 68 als rohrförmig ausgebildet angesprochen werden kann. Im unteren Bereich weist die Bohrung eine geringe Weitung auf und eine nicht mehr glattrunde Innenkontur, sondern eine mehreckige, genauer sechseckige Innenkontur, welche letztendlich der zumindest teilweisen Anlage von entsprechend ausgebildeten Seitenflächen eines ersten Vorsprunges 26 des Kükens 22 dienen. Des Weiteren weist der Hals 68 des Hahnes 20 an seinem dem ersten Vorsprung 26 des Kükens 22 zugewandten Ende auf seiner Außenumfangsfläche eine umlaufende Nut zur Aufnahme eines Dichtungsrings 56 auf, der dichtend gegen eine Bohrung 28 beziehungsweise einen daran sowohl zur Außenseite als auch zum Inneren 36 des Gehäuses 16 sich anschließenden Ansatz 29 wirkt.

Das Küken 22 weist auf seiner Außenseite 24 umlaufend angeordnet eine Nut 42 auf, in welcher ein Dichtring 44 aufgenommen ist. Der Dichtring 44 wirkt dichtend gegen eine Innenfläche 46 des Gehäuses 16. Die Nut 42 weist einen ersten Wandabschnitt 48 auf, welcher im Wesentlichen parallel zur einer Hauptachse 50 des Ventils 10 ausgebildet ist, als auch einen zweiten Wandabschnitt 52, der bogenförmig ausgebildet und der Außenkontur des Dichtringes 42 angeformt ist. Eine Tangente T, mit dem Bezugszeichen 54 in

Fig. 2 bezeichnet, dieses bogenförmigen zweiten Wandabschnittes verläuft im Wesentlichen senkrecht zu der Hauptachse 50 des Ventils 10. Des Weiteren weist das Küken 22 auf der dem Auslauf 18 zugewandten Seite eine Abflachung 72 auf. Dem ersten Wandabschnitt 48 ist gegenüberliegend kein weiterer Wandabschnitt der Nut 42 zugeordnet, so dass dieser auch teilweise frei zugänglich bei Betrachtung eines nicht in einem Gehäuse 16 montierten Kükens 22 vorliegt. Durch diese Ausbildung ist ein in etwa hutförmig gebildeter Bereich durch den ersten ringförmig umlaufenden Wandabschnitt 48 der Nut 42 und dem von diesem umschlossenen Bereich des Kükens 22 mit der Abflachung 72 geschaffen, so dass der Dichtring 44 einfach axial in Richtung der Hauptachse 50 des Ventils 10 unter Aufbringung einer gewissen Spannung in die Nut 42, auch automatisiert, eingesetzt werden kann.

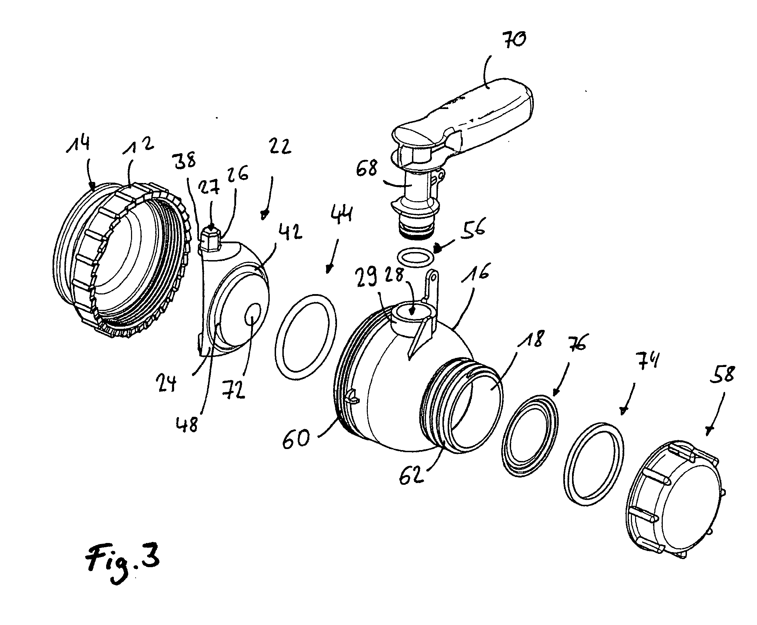

Des Weiteren umfasst das Küken den ersten Vorsprung 26, der zapfenförmig ausgebildet ist, mit an einer Oberseite 27 angeordneten Abflachungen 40 (siehe hierzu näher gehend Fig. 3 weiter unten). Dabei ist der Vorsprung 26 nicht bündig mit einer Stirnumfangsfläche des Kükens 22, zugewandt dem Auslaufstutzen 12, ausgebildet, sondern von dieser durch einen Rücksprung 64 abgesetzt. Eine Innenwandung 66 des Kükens 22 verläuft zur Gänze über die Bohrung 30 im Hals 68 des Hahnes 20.Der erste Vorsprung 26 ist vollständig im Hals 68 des Halses 20 aufgenommen, und liegt mit seiner Außenwandung vollständig an der Innenwandung des Halses 68 an. Damit ist eine sichere Lagerung als auch Betätigung des Hahnes und damit des Kükens 22 sichergestellt.

Der Vorsprung 26 weist eine sechseckige Außenkontur auf, wie Fig. 3 entnommen werden kann. Hierdurch werden sechs Seitenwandungen 38 zur Verfügung gestellt, die gegenüberliegenden Innenwandungen in dem unteren, dem ersten Vorsprung 26 zugewandten Bereich der Bohrung 30 des Halses 68 des Hahnes 20 entsprechen. Hierdurch erfolgt eine formschlüssige Aufnahme des als Zapfen ausgebildeten Vorsprunges 26 in der Bohrung 30, so dass auch eine sichere Mitnahme des Kükens auch unter starker Belastung bei vielfachen Betätigungen des Hahnes 20 sichergestellt ist.

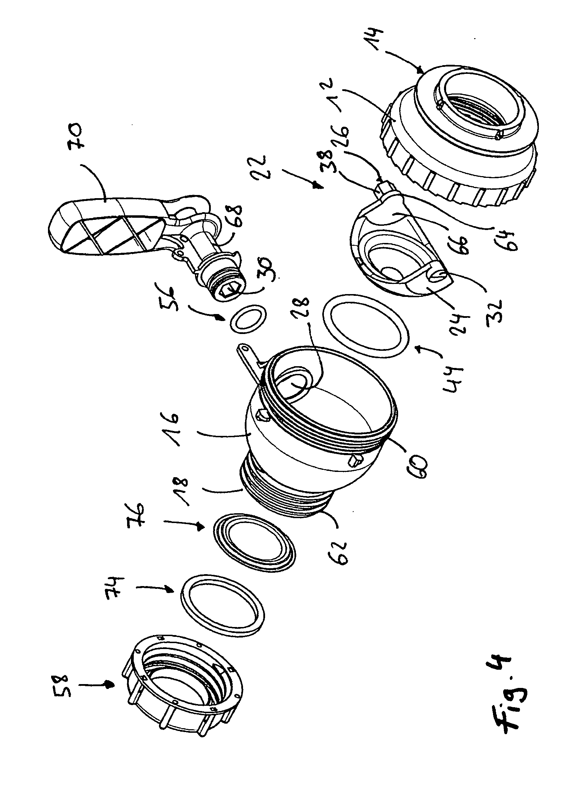

Gegenüberliegend dem ersten Vorsprung ist auf der Außenseite 24 des Kükens 22 ein zweiter Vorsprung 32 angeordnet, der in eine Ausnehmung 34 des Gehäuses 16 eingreift. Wie Fig. 4 entnommen werden kann, weist der zweite Vorsprung 32 eine runde Außenkontur auf. Der Vorsprung 32 schließt dabei bündig mit der Stirnumfangsfläche des Kükens 22, zugewandt dem Anschlussstutzen 12, ab. Die Höhe der Wandung der Ausnehmung 32 ist auf der dem Auslaufstutzen 12 zugewandten Seite der Ausnehmung 34 geringer als auf der gegenüberliegenden, dem Auslauf 18 zugewandten Seite, und weist zudem noch eine Abschrägung auf, welche insbesondere der einfachen Montage des erfindungsgemäßen Ventils 22 und dabei insbesondere dem erleichterten Einsatz des Kükens 22 in das Gehäuse 16 dient.

Das Küken 22 ist im Übrigen in etwa viertelkugelschalenartig ausgebildet.

Das Gehäuse 16 weist an seinem dem Anschlussstutzen 12 zugewandten Ende ein Außengewinde 60 auf, mit welchem das Kugelhahnventil 10 über ein Innengewinde des Auslaufstutzens 12 an diesem befestigbar ist.

Fig. 3 zeigt nun in einer Explosionsansicht das Ventil 10 gemäß Fig. 1, wobei besonders deutlich die Ausbildung des Kükens 22 wird, insbesondere des ersten Vorsprungs 26, zapfenförmig mit sechs Seitenwandungen 38 und der Oberseite 27 ausgebildet, wobei die Oberseite 27 noch Abflachungen 40, bezogen auf eine jede Seitenwandung 38, in einem Winkel von etwa 45° aufweist. Darüber hinaus ist auch die etwas hutartige Ausbildung des Kükens 22, gebildet durch die umlaufende Seitenwandung der Nut 42 und den von dieser umschlossenen Bereich einschließlich der Abflachung 72, zu erkennen. Darüber hinaus ist auch der Dichtring 74 und der Zwischenring 76, welche letztendlich innerhalb des Auslaufdeckels 58 angeordnet sind, der auf das Außengewinde 62 des Auslaufs 18 des Gehäuses 16 aufdrehbar ist, gut erkennbar.

Fig. 4 ist ebenfalls eine Explosionszeichnung und entspricht in etwa derjenigen der Fig. 3, allerdings ist dabei das Ventil um 90° gedreht, so dass insbesondere auch die zapfenförmig runde Ausbildung des zweiten Vorsprunges 32 gut erkennbar ist, ebenso wie die Ausbildung der Bohrung 30 des Halses 68 des Hahnes 20, die im unteren Bereich eine sechseckige Innenkontur aufweist, wodurch eine formschlüssige Aufnahme des ersten Vorsprungs 26 des Kükens 22 ermöglicht ist.

Mit der vorliegenden Erfindung ist somit ein einfach aufgebautes und konstruierbares Kugehahnventil zur Verfügung gestellt, dessen einzelne Bestandteile auch einfach austauschbar sind. Die einzelnen Bestandteile können dabei überwiegend im Spritzgussverfahren hergestellt werden. Der Dichtring 44, welcher in die Nut 42 des Kükens 22 aufgenommen wird, ist dabei vorzugsweise aus PTFE hergestellt, und zwar indem ein extrudiertes Rohr aus PTFE mechanisch gedreht wird.

Das erfindungsgemäße Kugelhahnventil zeichnet sich darüber hinaus durch eine hohe Langlebigkeit und eine kostengünstige Produktion aus.

## Patentansprüche

1. Kugelhahnventil (10) für Behälter (14) zum Transport und/oder Lagern von insbesondere Flüssigkeiten mit einem Ventilgehäuse (16) mit einem an einem ersten Ende des Gehäuses (16) angeordneten Auslauf (18) und einem dem ersten Ende gegenüberliegend angeordneten zweiten Ende zur Anordnung am Behälter (14), weiterhin umfassend einen Hahn (20) zur Betätigung eines mit dem Hahn (20) in Wirkverbindung stehenden, kugelschalig ausgebildeten Kükens (22), wobei das Küken (22) auf einer Außenseite (24) angeordnet mindestens einen ersten Vorsprung (26) zum Eingriff in eine Bohrung (28) des Gehäuses (16) als auch in eine Bohrung (30) des Hahnes (20) umfasst, wobei auf der Außenseite (24) des Kükens (22) eine umlaufende Nut (42) zur Aufnahme eines Dichtrings (44) angeordnet ist, der gegen eine Innenfläche (46) des Gehäuses (16) abdichtend wirkt, wobei die Nut (42) einen etwa parallel zu einer Hauptachse (50) des Ventils (10) verlaufenden ersten Wandabschnitt (48) aufweist, **dadurch gekennzeichnet, dass** die Nut (42) einen bogenförmig ausgebildeten zweiten Wandabschnitt (52) aufweist, der an eine Außenkontur des Dichtrings (44) angepasst ist, sowie eine Tangente T (54) aufweist, die in etwa senkrecht zu der Hauptachse (50) des Ventils (10) verläuft.

2. Kugelhahnventil gemäß Anspruch 1, **dadurch gekennzeichnet, dass** gegenüberliegend dem Hahn (20) das Küken (22) auf der Außenseite (24) angeordnet mindestens einen in einer Aufnahme (34) im Inneren (36) des Gehäuses (16) eingreifenden zweiten Vorsprung (32) umfasst.

3. Kugelhahnventil gemäß einem der vorhergehenden Ansprüche, **dadurch gekennzeichnet, dass** der erste und/oder zweite Vorsprung (26, 32) als Vollkörper ausgebildet ist.

4. Kugelhahnventil gemäß einem der vorhergehenden Ansprüche, **dadurch gekennzeichnet, dass** der erste und/oder zweite Vorsprung (26, 32) zapfenförmig ausgebildet ist.

5. Kugelhahnventil gemäß Anspruch 4, **dadurch gekennzeichnet, dass** eine Außenkontur des ersten und/oder zweiten Vorsprungs (26, 32) rund, drei-, vier-, fünf-, sechs-, sieben-, acht- oder 12-eckig ausgebildet ist.

6. Kugelhahnventil gemäß einem der Ansprüche 4 oder 5, **dadurch gekennzeichnet, dass** der erste zapfenförmig ausgebildete Vorsprung (26) auf seiner dem Hahn (20) zugewandten Oberseite (27) mindestens eine Abflachung (40) aufweist.

7. Kugelhahnventil gemäß einem der vorhergehenden Ansprüche, **dadurch gekennzeichnet, dass** das Küken (22) viertel- oder in etwa halbkugelschalig ausgebildet ist.

8. Kugelhahnventil gemäß einem der vorhergehenden Ansprüche, **dadurch gekennzeichnet, dass** der Dichtring (44) unter Spannung in die Nut (42) eingesetzt ist.

9. Kugelschalig ausgebildetes Küken (22) für ein Kugelhahnventil (10) mit mindestens einem auf einer Außenseite (24) desselben angeordneten ersten Vorsprung (26) zum Eingriff in eine Bohrung (28) eines Ventilgehäuses (16) als auch in eine Bohrung (30) eines Hahnes (20), wobei auf der Außenseite (24) des Kükens (22) eine umlaufende Nut (42) zur Aufnahme eines Dichtrings (44) angeordnet ist, der gegen eine Innenfläche (46) des Ventilgehäuses (16) abdichtbar wirkt, wobei die Nut (42) einen etwa parallel zu einer Achse, die im eingebauten Zustand des Kükens der Hauptachse (50) des Ventils (10) entspricht, verlaufenden ersten Wandabschnitt (48) aufweist, **dadurch gekennzeichnet, dass** die Nut (42) einen bogenförmig ausgebildeten zweiten Wandabschnitt (52) aufweist, der an eine Außenkontur des Dichtrings (44) angepasst ist, sowie eine Tangente T (54) aufweist, die in etwa senkrecht zu der Achse, die im eingebauten Zustand des Kükens der Hauptachse (50) des Ventils (10) entspricht, verläuft.

## Claims

1. Ball valve (10) for containers (14) for transporting and/or storing in particular liquids, with a valve housing (16) with an outlet (18) arranged at a first end of the housing (16) and a second end arranged opposing the first end for arrangement on the container (14), further comprising a plug valve (20) for actuating a plug (22) having an operative connection to the plug valve (20) and configured in the manner of a spherical shell, wherein the plug (22), arranged on an outside (24), comprises at least one first projection (26) for engagement in a bore (28) of the housing (16) as well as in a bore (30) of the plug valve (20), wherein arranged on the outside (24) of the plug (22) is a peripheral groove (42) to receive a sealing ring (44), which acts in a sealing manner against an inner face (46) of the housing (16), the groove (42) having a first wall portion (48) running approximately parallel to a main axis (50) of the valve (10), **characterised in that** the groove (42) has an arcuate second wall portion (52), which is adapted to an outer contour of the sealing ring (44), and has a tangent T (54), which runs approximately perpendicular to the main axis (50) of the valve (10).

2. Ball valve according to claim 1, **characterised in that**, opposing the plug valve (20), the plug (22), arranged on the outside (24), has at least one second projection (32) engaging in a receiver (34) in the interior (36) of the housing (16).

3. Ball valve according to any one of the preceding claims, **characterised in that** the first and/or the second projection (26, 32) is configured as a solid body.

4. Ball valve according to any one of the preceding claims, **characterised in that** the first and/or second projection (26, 32) is pin-like.

5. Ball valve according to claim 4, **characterised in that** an outer contour of the first and/or second projection (26, 32) is round, triangular, quadrangular, pentagonal, hexagonal, heptagonal, octagonal or dodecagonal.

6. Ball valve according to either of claims 4 or 5, **characterised in that** the first pin-like projection (26), on its upper side (27) facing the plug valve (20), has at least one flattened area (40).

7. Ball valve according to any one of the preceding claims, **characterised in that** the plug (22) is configured in the manner of a quarter or approximately half spherical shell.

8. Ball valve according to any one of the preceding claims, **characterised in that** the sealing ring (44) is inserted into the groove (42) under tension.

9. Plug (22) configured in the manner of a spherical shell for a ball valve (10) with at least one first projection (26) arranged on an outside (24) thereof for engagement in a bore (28) of a valve housing (16) as well as in a bore (30) of a plug valve (20), wherein arranged on the outside (24) of the plug (22) is a peripheral groove (42) for receiving a sealing ring (44), which acts in a sealable manner against an inner face (46) of the valve housing (16), the groove (42) having a first wall portion (48) running approximately parallel to an axis, which, in the installed state of the plug, corresponds to the main axis (50) of the valve (10), **characterised in that** the groove (42) has an arcuate second wall portion (52), which is adapted to an outer contour of the sealing ring (44), and has a tangent T (54), which runs approximately perpendicular to the axis, which, in the installed state of the plug, corresponds to the main axis (50) of the valve (10).

## Revendications

1. Soupape pour robinet à boisseau sphérique (10) convenant pour des récipients (14) de transport et/ou de stockage, notamment de liquides, comportant un carter de soupape (16) doté d'une sortie (18) disposée à une première extrémité du carter (16) et d'une seconde extrémité disposée en face de la première extrémité pour l'agencement au récipient (14), comportant en outre un robinet (20) pour l'actionnement d'un boisseau (22), lequel est réalisé sous forme de calotte sphérique et coopère avec le robinet (20), le boisseau (22) comportant, sur une face externe (24), au moins une première saillie (26) venant s'engager dans un perçage (28) du carter (16) ainsi que dans un perçage (30) du robinet (20), une rainure (42) périphérique étant disposée sur la face externe (24) du boisseau (22) pour recevoir une bague d'étanchéité (44) exerçant un effet d'étanchéité contre une surface interne (46) du carter (16), la rainure (42) comportant une première section de paroi (48) sensiblement parallèle à un axe central (50) de la soupape (10), **caractérisée en ce que** la rainure (42) comporte une seconde section de paroi (52), laquelle est réalisée sous forme arquée et épouse un contour extérieur de la bague d'étanchéité (44), ainsi qu'une tangente T (54) sensiblement perpendiculaire à l'axe central (50) de la soupape (10).

2. Soupape pour robinet à boisseau sphérique selon la revendication 1, **caractérisée en ce qu'**en face du robinet (20), le boisseau (22) comporte, sur la face externe (24), au moins une seconde saillie (32) venant s'engager dans un logement (34) à l'intérieur (36) du carter (16).

3. Soupape pour robinet à boisseau sphérique selon l'une des revendications précédentes, **caractérisée en ce que** la première et/ou la seconde saillie (26,32) sont conçues comme des corps pleins.

4. Soupape pour robinet à boisseau sphérique selon l'une des revendications précédentes, **caractérisée en ce que** la première et/ou la deuxième saillie (26, 32) sont réalisées sous forme de tourillons.

5. Soupape pour robinet à boisseau sphérique selon la revendication 4, **caractérisée en ce qu'**un contour extérieur de la première et/ou de la seconde saillie (26,32) est réalisé sous forme ronde, triangulaire, carrée, pentagonale, hexagonale, heptagonale, octogonale ou dodécagonale.

6. Soupape pour robinet à boisseau sphérique selon l'une des revendications 4 ou 5, **caractérisée en ce que** la première saillie (26) réalisée sous forme de tourillon comporte au moins un méplat (40) sur sa face supérieure (27) tournée vers le robinet (20).

7. Soupape pour robinet à boisseau sphérique selon l'une des revendications précédentes, **caractérisée en ce que** le boisseau (22) est réalisé sous forme de calotte en quart de sphère ou sensiblement sous forme de calotte en demi-sphère.

8. Soupape pour robinet à boisseau sphérique selon l'une des revendications précédentes, **caractérisée en ce que** la bague d'étanchéité (44) est insérée dans la rainure (42) sous tension.

9. Boisseau (22) en forme de calotte sphérique pour une soupape pour robinet à boisseau sphérique (10) comportant au moins une première saillie (26), laquelle est disposée sur une face externe (24) dudit boisseau et vient s'engager dans un perçage (28) d'un carter de soupape (16) ainsi que dans un perçage (30) d'un robinet (20), une rainure périphérique (42) étant disposée sur la face externe (24) du boisseau (22) pour recevoir une bague d'étanchéité (44) susceptible d'exercer un effet d'étanchéité contre une surface interne (46) du carter de soupape (16), la rainure (42) comportant une première section de paroi (48) sensiblement parallèle à un axe correspondant à l'axe central (50) de la soupape (10) à l'état monté du boisseau, **caractérisé en ce que** la rainure (42) comporte une seconde section de paroi (52), laquelle est réalisée sous forme arquée et épouse un contour extérieur de la bague d'étanchéité (44), ainsi qu'une tangente T (54) sensiblement perpendiculaire à l'axe correspondant à l'axe central (50) de la soupape (10) à l'état monté du boisseau.
